# EUROPEAN PATENT APPLICATION

(11) **EP 4 789 899 A1**
(43) Date of publication of application: **12.08.2026**
(21) Application number: 25225470.1
(22) Date of filing: 19.12.2025
(51) Int. Cl.: B60L 3/12, B60L 53/14, B60L 53/31, B60L 53/63, B60L 53/66, B60L 53/67, B60L 53/68, B60L 55/00

(54) **ELECTRIC POWER CONTROL SYSTEM, ELECTRIC POWER CONTROL METHOD, AND ELECTRIC POWER CONTROL PROGRAM**

(30) Priority: 10.02.2025 JP 2025019893
(71) Applicant: Toyota Jidosha Kabushiki Kaisha, Toyota-shi, Aichi-ken 471-8571 (JP)
(72) Inventor: MORISHIMA, Akinori, TOYOTA-SHI, AICHI-KEN, 471-8571 (JP)
(74) Representative: Cabinet Beau de Loménie

(57) **Abstract**

An electric power control system includes electric vehicles and a facility. The facility includes chargers and a server. The server includes processing circuitry. The processing circuitry controls charging and discharging operations of each charger. The processing circuitry executes a predicting process for predicting electric power demands of the facility in specified time periods, and when any one of the predicted electric power demands is greater than a predetermined specified value, a requesting process for issuing a connection request requesting for the electric vehicles that is capable of supplying the facility with electric power to be connected to the chargers.

## Description

### CROSS-REFERENCE TO RELATED APPLICATIONS

This application is based upon and claims the benefit of priority from prior Japanese Patent Application No. 2025-019893, filed on February 20, 2025, the entire contents of which are incorporated herein by reference and to which the person of the art can refer when considering the present disclosure.

### BACKGROUND

### 1. Field

The following description relates to an electric power control system, an electric power control method, and an electric power control program.

### 2. Description of Related Art

JP2022-003849A discloses a charge-discharge management system for business premises supplied with electric power from an electric power supplier. The charge-discharge management system determines, from the electric power demand of the business premises, the electric power supplied from the business premises to electric vehicles and the electric power supplied from the electric vehicles to the business premises. The charge-discharge control system performs peak shaving of electric power by having the electric vehicles, which are connected to chargers installed on the business premises, supply electric power to the business premises.

Peak shaving of electric power is performed in this manner by connecting the electric vehicles that can supply electric power to a facility to chargers.

### SUMMARY

One general aspect is an electric power control system including electrical vehicles, each provided with a battery that is chargeable and dischargeable, and a facility configured to draw electric power. The facility includes power-receiving equipment, chargers, and a server. The power-receiving equipment is configured to be supplied with electric power from an electric power grid. The chargers are each electrically connected to the power-receiving equipment and each selectively performs one of a charging operation and a discharging operation in a state electrically connected to one of the electric vehicles. The charging operation causes the power receiving equipment to supply electric power to the electrically connected electric vehicle, and the discharging operation causes the electrically connected electric vehicle to supply electric power to the facility. The server is provided with processing circuitry configured to control the charging operation and the discharging operation of each of the chargers. The processing circuitry is configured to execute a predicting process that predicts electric power demands, in which each of the electric power demands is the electric power drawn by the facility in a corresponding one of specified time periods. When any one of the predicted electric power demands is greater than a predetermined specified value, the processing circuitry is configured to execute a requesting process that issues a connection request requesting for any of the electric vehicles that is capable of supplying the facility with electric power to be connected to one of the chargers.

Another general aspect is a method for controlling electric power in an electric power control system. The electric power control system includes electric vehicles, each provided with a battery that is chargeable and dischargeable, and a facility configured to draw electric power. The facility includes power-receiving equipment, chargers, and a server. The power-receiving equipment is configured to be supplied with electric power from an electric power grid. The chargers are each electrically connected to the power-receiving equipment and each selectively performs one of a charging operation and a discharging operation in a state electrically connected to one of the electric vehicles. The charging operation causes the power receiving equipment to supply electric power to the electrically connected electric vehicle, and the discharging operation causes the electrically connected electric vehicle to supply electric power to the facility. The server is provided with processing circuitry configured to control the charging operation and the discharging operation of each of the chargers. The method includes executing a predicting process and a requesting process with the processing circuitry. The predicting process is executed to predict electric power demands, in which each of the electric power demands is the electric power drawn by the facility in a corresponding one of specified time periods. When any one of the predicted electric power demands is greater than a predetermined specified value, the requesting process is executed to issue a connection request requesting for any of the electric vehicles that is capable of supplying the facility with electric power to be connected to one of the chargers.

A further general aspect is an electric power control program for an electric power control system. The electric power control system includes electric vehicles, each provided with a battery that is chargeable and dischargeable, and a facility configured to draw electric power. The facility includes power-receiving equipment, chargers, and a server. The power-receiving equipment is configured to be supplied with electric power from an electric power grid. The chargers are each electrically connected to the power-receiving equipment and each selectively performs one of a charging operation and a discharging operation in a state electrically connected to one of the electric vehicles. The charging operation causing the power receiving equipment to supply electric power to the electrically connected electric vehicle, and the discharging operation causing the electrically connected electric vehicle to supply electric power to the facility. The server is provided with processing circuitry configured to control the charging operation and the discharging operation of each of the chargers. The electric control program, when executed by the processing circuitry, causes the processing circuitry to execute a predicting process and a requesting process. The predicting process predicts electric power demands, in which each of the electric power demands is the electric power drawn by the facility in a corresponding one of specified time periods. When any one of the predicted electric power demands is greater than a predetermined specified value, the requesting process is executed to issue a connection request requesting for any of the electric vehicles that is capable of supplying the facility with electric power to be connected to one of the chargers.

Other features and aspects will be apparent from the following detailed description, the drawings, and the claims.

### BRIEF DESCRIPTION OF THE DRAWINGS

Fig. 1 is a schematic diagram of an electric power control system.
Fig. 2 is a graph illustrating peak shaving of electric power.
Fig. 3 is a flowchart illustrating a process for issuing a first connection request executed by processing circuitry of an electric power control system in accordance with a first embodiment.
Fig. 4 is a graph illustrating a load curve predicted for the following day by the processing circuitry of the electric power control system in accordance with the first embodiment.
Fig. 5 is a diagram illustrating one example of a combination of a recommended vehicle and a recommended charger selected by the processing circuitry of the electric power control system in accordance with the first embodiment.
Fig. 6 is a diagram illustrating one example of an image displayed on a terminal receiving the first connection request from the electric power control system in accordance with the first embodiment.
Fig. 7 is a flowchart illustrating a process for issuing a second connection request executed by the processing circuitry of the electric power control system in accordance with the first embodiment.
Fig. 8 is a graph illustrating a load curve predicted by the processing circuitry of the electric power control system in accordance with the first embodiment for the day on which the prediction is made.
Fig. 9 is a diagram illustrating one example of an image displayed on a terminal receiving the second connection request from the electric power control system in accordance with the first embodiment.
Fig. 10 is a graph illustrating a load curve predicted by the processing circuitry of the electric power control system in accordance with a modified example of the first embodiment for the day on which the prediction is made and for the following day.
Fig. 11 is a diagram illustrating one example of an image displayed on a terminal receiving the first and second connection requests from the electric power control system in accordance with the modified example of the first embodiment.
Fig. 12 is a diagram illustrating one example of a combination of a recommended vehicle and a recommended charger selected by the processing circuitry of an electric power control system in accordance with a second embodiment.
Fig. 13 is a flowchart illustrating a process for issuing a third connection request executed by the processing circuitry of an electric power control system in accordance with a third embodiment.
Fig. 14 is a graph illustrating a load curve acquired by the processing circuitry of the electric power control system in accordance with the third embodiment.
Fig. 15 is a diagram illustrating one example of a combination of a recommended vehicle and a recommended charger selected by the processing circuitry of the electric power control system in accordance with the third embodiment.
Fig. 16 is a diagram illustrating one example of an image displayed on a terminal receiving the third connection request from the electric power control system in accordance with the third embodiment.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

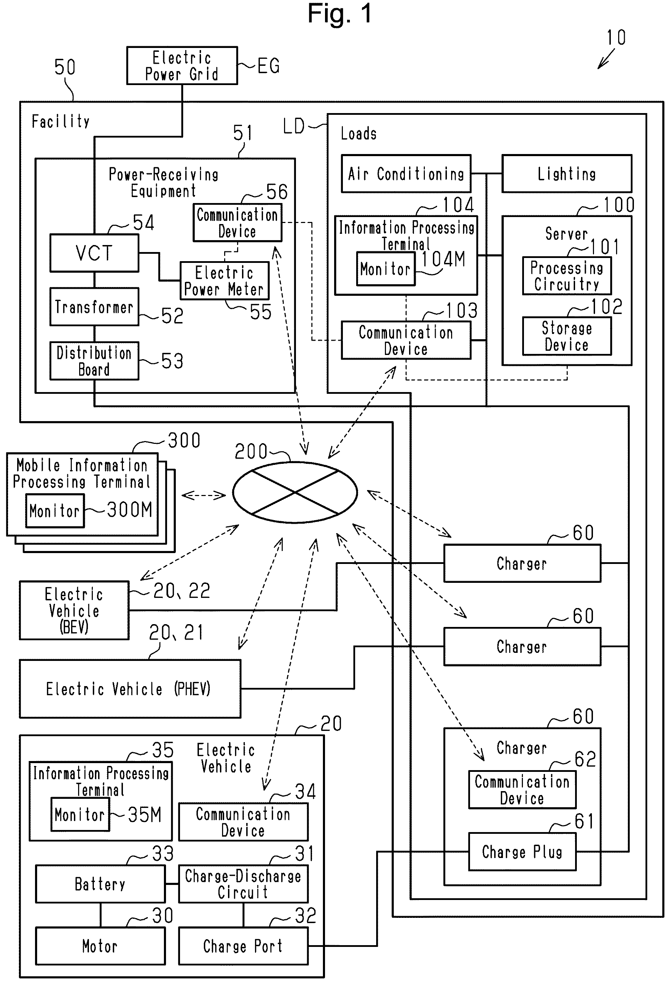

An electric power control system 10 in accordance with a first embodiment will now be described with reference to Figs. 1 to 9.

### Configuration of the Electric Power Control System 10

As shown in Fig. 1, the electric power control system 10 includes electric vehicles 20 and a facility 50, which consumes electric power. Fig. 1 shows an example of the electric power control system 10 including three electric vehicles 20 and the facility 50, which is provided with three chargers 60. The number of the electric vehicles 20 is not limited to three. The number of the chargers 60 is not limited to three. The solid lines in Fig. 1 indicate paths for the supply of electric power. The broken lines in Fig. 1 indicate paths for the communication of information.

The facility 50 includes power-receiving equipment 51, the chargers 60, a server 100, a communication device 103, and an information processing terminal 104. The facility 50 includes loads LD that consume electric power. The loads LD are electrically connected to the power-receiving equipment 51. The loads LD include, for example, air conditioning equipment and lighting installed in the facility 50. The facility 50 is, for example, the business premises of an automobile dealership.

### The Power-Receiving Equipment 51

The power-receiving equipment 51 is supplied with electric power from an electric power grid EG managed by an electric power supplier. The power-receiving equipment 51 includes a transformer 52, a distribution board 53, a Voltage and Current Transformer (VCT) 54, an electric power meter 55, and a communication device 56.

The transformer 52 converts the voltage of the electric power supplied from the electric power grid EG to a specified voltage that is applicable to the loads LD. The distribution board 53 distributes electric power, which has been transformed to a specified voltage by the transformer 52, to the loads LD. The VCT 54 is supplied with electric power from the electric power grid EG and converts the electric power having a high voltage and a large current into electric power having a low voltage and a small current such that the electric power can be measured by the electric power meter 55. Based on the electric power converted by the VCT 54, the electric power meter 55 measures the electric power drawn by the loads LD in the facility 50 and supplied from the electric power grid EG.

The power-receiving equipment 51 is wire-connected, in a manner allowing for communication, to the server 100. The power-receiving equipment 51 is connected by its communication device 56 to an external communication network 200. The power-receiving equipment 51 may be configured to communicate with the server 100 through the external communication network 200. The power-receiving equipment 51 sends information including the electric power measured by the electric power meter 55 to the server 100.

### The Chargers 60 and the Electric Vehicles 20

The chargers 60 each include a charge plug 61 and a communication device 62. The chargers 60 are electrically connected to the power-receiving equipment 51. More specifically, the charge plug 61 of each of the chargers 60 is electrically connected to the distribution board 53 of the power-receiving equipment 51. Fig. 1 illustrates only one of the chargers 60 in detail and does not illustrate the other chargers 60 in detail.

Each electric vehicle 20 includes a motor 30, a battery 33 that is chargeable and dischargeable, a charge port 32, a charge-discharge circuit 31, a communication device 34, and an information processing terminal 35. The electric vehicles 20 include a plug-in hybrid electric vehicle 21 and a battery electric vehicle 22. Fig. 1 illustrates only one of the electric vehicles 20 in detail and does not illustrate the other electric vehicles 20 in detail.

The motor 30 is the drive source of the electric vehicle 20. The motor 30 uses the electrical energy stored in the battery 33 to drive the electric vehicle 20. The information processing terminal 35 includes a monitor 35M configured to display images. The plug-in hybrid electric vehicle 21 further includes a fuel tank, which contains fuel, and an engine, which consumes the fuel to drive the plug-in hybrid electric vehicle 21. The battery electric vehicle 22 has no fuel tank and no engine.

The charge port 32 is connectable to the charge plug 61 of each charger 60. When the charge port 32 is electrically connected to a charge plug 61, the electric vehicle 20 is electrically connected to the corresponding charger 60. The charge-discharge circuit 31 includes a relay and an electric power conversion circuit. The relay closes and opens a path for the supply of electric power from the charge port 32 to the battery 33. The charge-discharge circuit 31 is controlled to perform a charging operation and a discharging operation, which will be described later.

Each charger 60, when electrically connected to any one of the electric vehicles 20, is configured to perform a charging operation. During the charging operation, the power-receiving equipment 51 supplies the electric power from the electric power grid EG to the electric vehicle 20. The facility 50 draws the electric power supplied from the electric power grid EG when the charger 60 performs a charging operation. The charger 60, when performing a charging operation, acts as a load LD that draws electric power.

Each charger 60, when electrically connected to any one of the electric vehicles 20, is configured to perform a discharging operation. During the discharging operation, the electric vehicle 20 supplies the facility 50 with electric power from the battery 33.

Each charger 60 is connected by its communication device 62 to the external communication network 200. Each charger 60 is configured to communicate with the server 100 through the external communication network 200. The charger 60 and the server 100 can be wire-connected in a manner allowing for communication.

Each charger 60 sends, to the server 100, information indicating the capacity of the charger 60 for supplying electric power from an electric vehicle 20 to the facility 50.

The charger 60 also sends, to the server 100, information indicating whether an electric vehicle 20 can be connected to the charger 60. More specifically, the charger 60 transmits information indicating whether the charge plug 61 of the charger 60 is connected to a charge port 32. If the charge plug 61 is not connected to a charge port 32, this indicates that the charger 60 is available for connection to an electric vehicle 20. If the charge plug 61 is connected to a charge port 32, this indicates that the charger 60 is already connected to an electric vehicle 20.

Each charger 60 sends charger identification information, which identifies the charger 60, to the server 100. The charger identification information includes, for example, the location of where the charger 60 is installed. The charger identification information further includes, for example, the identification number of the charger 60. The charger identification information includes, for example, the model of the charger 60.

Each charger 60 sends, to the server 100, information specifying the electric vehicle 20 connected to the charger 60. More specifically, the charger 60 acquires vehicle identification information, from the electric vehicle 20 connected to the charger 60, identifying the electric vehicle 20. The vehicle identification information will be described later. The charger 60 associates the acquired vehicle identification information with the charger identification information of the charger 60 to generate information specifying the combination of the charger 60 and the electric vehicle 20 that are connected to each other.

Each electric vehicle 20 is connected by its communication device 34 to the external communication network 200. The electric vehicle 20 is configured to communicate with the server 100 through the external communication network 200.

Each electric vehicle 20 sends the vehicle identification information, which identifies the electric vehicle 20, to the server 100. The vehicle identification information includes the numbers, letters, and symbols on the vehicle registration plate of the electric vehicle 20. The vehicle identification information also includes information indicating whether the electric vehicles 20 is the plug-in hybrid electric vehicle 21 or the battery electric vehicle 22. The vehicle identification information may include the Vehicle Identification Number (VIN) of the electric vehicle 20.

Each electric vehicle 20 sends information indicating the amount of electrical energy stored in its battery 33 to the server 100.

### The Server 100

The server 100 includes processing circuitry 101, which executes programs to perform various processes, and a storage device 102, which stores the programs. The processing circuitry 101 includes a processor. The storage device 102 stores an electric power control program. The processing circuitry 101 executes the electric power control program to perform various processes. The server 100 is connected by the communication device 103 to the external communication network 200.

The storage device 102 stores the information received from the power-receiving equipment 51, the electric vehicles 20, and the chargers 60. More specifically, the storage device 102 stores electric power demands of the facility 50 in specified time periods of electric power demands. The storage device 102 stores information indicating the capacity of each charger 60 for supplying electric power from an electric vehicle 20 to the facility 50. The storage device 102 stores information of each charger 60 indicating whether it is available for connection to an electric vehicle 20. The storage device 102 stores the charger identification information of each charger 60. The storage device 102 stores information specifying each combination of the charger 60 and the electric vehicle 20 that are connected to each other. The storage device 102 stores the vehicle identification information of each electric vehicle 20. The storage device 102 stores the information indicating the amount of electrical energy stored in the battery 33 of each electric vehicle 20.

The server 100 is connected by the communication device 103 to the information processing terminal 104. The information processing terminal 104 includes a monitor 104M configured to display images. The information processing terminal 104 is installed in the facility 50. The information processing terminal 104 is used by, for example, the manager of the facility 50.

The server 100 is configured to communicate with mobile information processing terminals 300 through the external communication network 200. Each mobile information processing terminal 300 includes a monitor 300M configured to display images. Each mobile information processing terminal 300 is a company-issued smartphone used by an employee at the facility 50. Employees at the facility 50 include, for example, a manager who is managing the electric vehicles 20. The mobile information processing terminals 300 include wearable terminals, tablet terminals, and other terminals. Wearable terminals include, for example, a bracelet-type terminal worn on the wrist, a necklace-type terminal worn around the neck, and other similar wearable devices.

Peak shaving of electric power through control of charging and discharging operations

The basic fee for electric power supplied from the electric power grid EG generally increases as the contracted demand increases. The contracted demand is set based on the maximum electric power demand within the past year. The maximum electric power demand is defined as the maximum value of the electric power during predetermined demand intervals. The demanded time interval is, for example, 30 minutes.

When the electric power during a demand interval becomes greater than the maximum electric power demand within the past year, a new contracted demand is set based on the electric power during that demand interval. To keep the basic fee low, the average electric power during each demand interval must not become greater than the maximum electric power demand within the past year.

The processing circuitry 101 controls the charging operation and the discharging operation of each charger 60. This allows the electric power control system 10 to perform peak shaving of electric power. Peak shaving maintains the electric power during each demand interval at or below the maximum electric power demand within the past year.

For example, the processing circuitry 101 controls the charging operation and the discharging operation of each charger 60 so that the electric power drawn by the facility 50 in each specified time period does not become greater than the past maximum electric power demand of the facility 50. The specified time periods may be shorter than the demand intervals. Thus, the electric power control system 10 maintains the electric power in each specified time period at or below the maximum electric power demand within the past year.

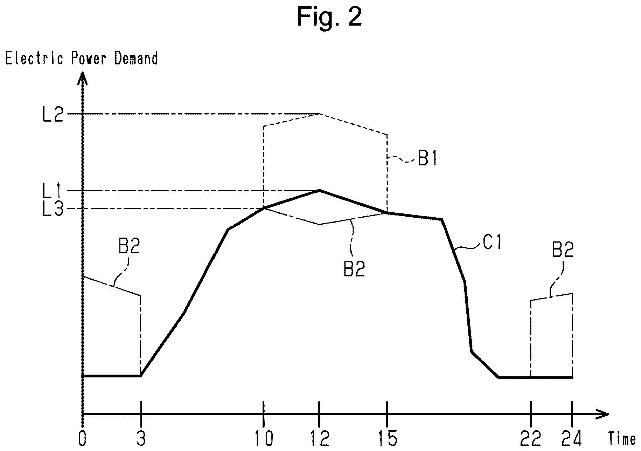

In Fig. 2, solid line C1 indicates the transition of the electric power demand in each specified time period from "00:00" to "24:00" when charging and discharging operations are not performed. That is, solid line C1 is a load curve showing changes over time in the electric power demand in each specified time period. The electric power demand in each specified time period tends to be higher in daytime than in nighttime. The specified time period is, for example, 30 minutes and the same as the demand interval.

As shown in Fig. 2, the maximum value of the electric power demand in each specified time period when charging and discharging operations are not performed is "L1." In this case, "L1" is also the past maximum electric power demand.

Broken line B1 indicates the transition of the electric power demand when charging operations are performed from "10:00" to "15:00." The maximum value of the electric power demand when charging operations are performed from "10:00" to "15:00" is "L2" and greater than "L1."

The single-dashed line B2 shows the transition of the electric power demand when charging operations are performed from "00:00" to "03:00" and from "22:00" to "24:00" and when discharging operations are performed from "10:00" to "15:00." In the periods from "00:00" to "03:00" and from "22:00" to "24:00," the electric power drawn by the loads LD other than the chargers 60 is low. Thus, even if charging operations are performed, the electric power demand will remain lower than "L1." When discharging operations are performed from "10:00" to "15:00," the facility 50 draws the electric power supplied from the electric power grid EG and the electric power supplied from the electric vehicles 20. This, in comparison which when charging and discharging operations are not performed as indicated by solid line C1, the maximum value of the electric power demand is "L3" and less than "L1."

Issuance of connection request based on electric power demand predicted for a following day by the processing circuitry 101

To perform peak shaving of electric power with the electric vehicles 20, the electric vehicles 20 that are capable of supplying electric power to the facility 50 are connected to the chargers 60.

The electric power control system 10 executes, at a specified time, a process for having the electric vehicles 20, which are capable of supplying electric power to the facility 50, connected to the chargers 60. The process includes predicting the electric power demand in each specified time period of the day following the day the prediction is made. If the predicted electric power demand in any specified time period is greater than a predetermined specified value DE, the process includes a requesting process of issuing a connection request, on the day the prediction is made, requesting for the electric vehicles 20 that are capable of supplying electric power to the facility 50 to be connected to the chargers 60. In the description hereafter, the alphabetic character of "S" affixed to a number represents a step number.

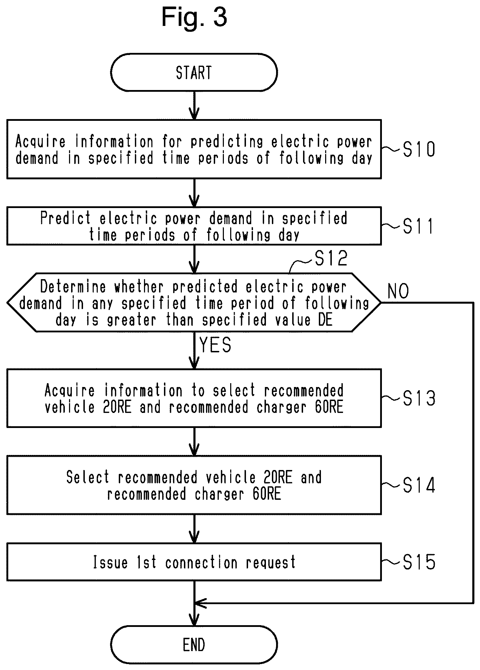

As shown in Fig. 3, when the process starts, in S10, the processing circuitry 101 acquires information used to predict the electric power demand in each specified time period of the following day. For example, the processing circuitry 101 acquires weather data for the following day and the past electric power demand in each specified time period stored in the storage device 102. Then, the processing circuitry 101 proceeds to S11.

In S11, the processing circuitry 101 predicts the electric power demand in each specified time period of the following day based on the acquired information. The processing circuitry 101 applies a known method to predict the electric power demand in each specified time period of the following day.

For example, the processing circuitry 101 predicts the electric power demand in each specified time period of the following day based on the weather data for the following day and the past electric power demand in each specified time period. To predict the electric power demand of the facility 50 in each specified time period of the following day, the processing circuitry 101 may use a model trained through machine learning.

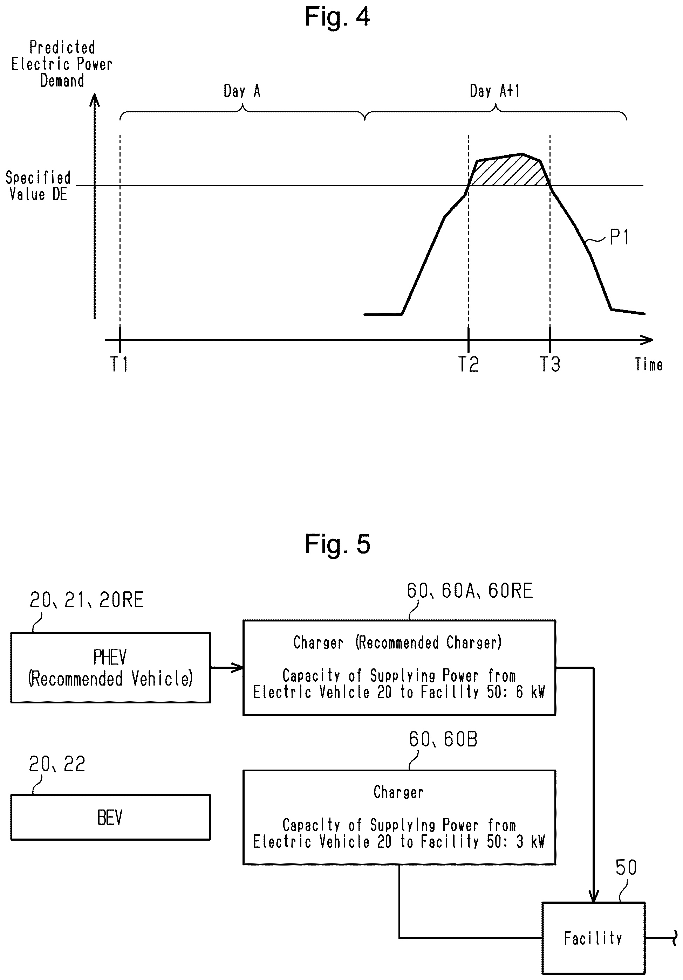

As shown in Fig. 4, the processing circuitry 101 performs S11 at time "T1" on day "A." Time "T1" is, for example, before a daily morning meeting is held in the facility 50 on day "A." In S11, the processing circuitry 101 acquires a predicted load curve P1 that indicates changes over time of predicted values of the electric power demand in each specified time period of day "A+1," which is the day following day "A." Then, the processing circuitry 101 proceeds to S12 of Fig. 3.

In S12 of Fig. 3, the processing circuitry 101 determines whether the electric power demand in any of the specified time periods of the following day predicted at time "T1" is greater than the specified value DE. The specified value DE is, for example, the maximum electric power demand of the facility 50. If the electric power demand in each specified time period of the following day predicted at time "T1" is not greater than the specified value DE (S12: NO), the processing circuitry 101 ends the process of Fig. 3.

In Fig. 4, the predicted electric power demand is greater than the specified value DE from time "T2" to time "T3" of day "A+1." If the predicted electric power demand in any of the specified time periods of the following day is greater than the specified value DE (S12: YES), the processing circuitry 101 proceeds to S13 of Fig. 3.

In S13 of Fig. 3, the processing circuitry 101 acquires information required to select, from the electric vehicles 20, recommended vehicles 20RE that are to be connected to chargers 60. More specifically, the processing circuitry 101 acquires, from the storage device 102, information indicating whether the type of each of the electric vehicle 20 is the plug-in hybrid electric vehicle 21 or the battery electric vehicle 22. Further, in S13, the processing circuitry 101 acquires information required to select, from the chargers 60, recommended chargers 60RE to which the recommended vehicles 20RE are to be connected. More specifically, the processing circuitry 101 acquires information, from the storage device 102, indicating the capacity of each charger 60 for supplying electric power from an electric vehicle 20 to the facility 50. Then, the processing circuitry 101 proceeds to S14.

In S14, the processing circuitry 101 executes a vehicle selection process for selecting, from the electric vehicles 20, the recommended vehicles 20RE that are to be connected to chargers 60. Further, in S14, the processing circuitry 101 executes a charger selection process for selecting, from the chargers 60, the recommended chargers 60RE to which the recommended vehicles 20RE are to be connected.

The processing circuitry 101 selects at least one recommended vehicle 20RE and at least one recommended charger 60RE so that the electric power demand will not become greater than the specified value DE. The processing circuitry 101 selects, for example, the recommended vehicle 20RE and the recommended charger 60RE so that the electric vehicle 20 supplies the facility 50 with electric power to offset demand exceeding the specified value DE in the time period during which the predicted electric power demand is greater than the specified value DE.

As shown in Fig. 5, when the electric vehicles 20 include at least one plug-in hybrid electric vehicle 21 and at least one battery electric vehicle 22, the processing circuitry 101 selects the plug-in hybrid electric vehicle 21 as the recommended vehicle 20RE in S14.

The processing circuitry 101 selects the charger 60 of which the capacity is the highest for supplying electric power from an electric vehicle 20 to the facility 50 as the recommended charger 60RE in S14.

In the example shown in Fig. 5, a charger 60A has a capacity for supplying an electric power of 6 kW from an electric vehicle 20 to the facility 50, and a charger 60B has a capacity for supplying an electric power of 3 kW from an electric vehicle 20 to the facility 50. In this case, the processing circuitry 101 selects the charger 60A as the recommended charger 60RE in S14.

After selecting the recommended vehicle 20RE and the recommended charger 60RE, the processing circuitry 101 proceeds to S15 of Fig. 3.

The processing circuitry 101 may select more than one recommended vehicle 20RE and more than one recommended charger 60RE.

In S15 of Fig. 3, the processing circuitry 101 executes a requesting process for issuing a connection request requesting for the electric vehicles 20 capable of supplying the facility 50 with electric power to be connected to the chargers 60. More specifically, the processing circuitry 101 executes the requesting process and issues a first connection request, as a connection request, requesting for the recommended vehicles 20RE to be connected to the recommended chargers 60RE.

The electric power control system 10 issues the first connection request to the information processing terminal 104, which is installed in the facility 50. The electric power control system 10 issues the first connection request to the mobile information processing terminals 300 used by the employees at the business premises through the external communication network 200. The electric power control system 10 issues the first connection request to the mobile information processing terminal 300 used by the manager who is managing the electric vehicles 20 through the external communication network 200. The electric power control system 10 issues the first connection request to the information processing terminal 35 installed in each electric vehicle 20 through the external communication network 200. The electric power control system 10 issues the first connection request to the information processing terminal 35 installed in the recommended vehicle 20RE through the external communication network 200. Then, the processing circuitry 101 ends the process of Fig. 3.

Image for having the electric vehicles 20 connected to the chargers 60 on the following day

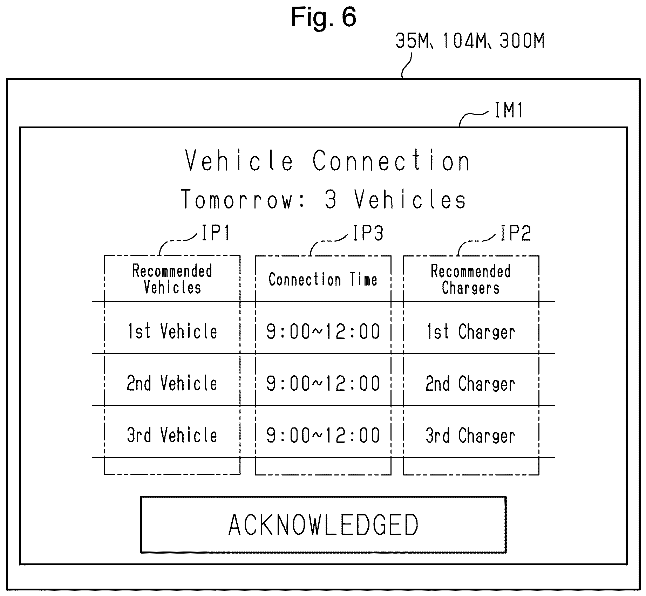

Fig. 6 shows a first request image IM1 displayed on the monitor 104M of the information processing terminal 104 that receives the first connection request. The first request image IM1 is one example of an image for having the electric vehicles 20 connected to the chargers 60 on the following day. The first request image IM1 is also displayed on the monitor 300M of each mobile information processing terminal 300 that receives the first connection request, and on the monitor 35M of each information processing terminal 35 that receives the first connection request.

The first request image IM1 includes the date of the day that the recommended vehicle 20RE is to be connected to the recommended charger 60RE. More specifically, the first request image IM1 shows the date of the day following the day the processing circuitry 101 issues the first connection request. The first request image IM1 indicates the quantity of the recommended vehicles 20RE.

The first request image IM1 includes a first image section IP1, a second image section IP2, and a third image section IP3.

The first image section IP1 indicates the recommended vehicles 20RE. The second image section IP2 indicates the recommended chargers 60RE. The third image section IP3 indicates the time periods during which the recommended vehicles 20RE indicated in the first image section IP1 are to be connected to the recommended chargers 60RE indicated in the second image section IP2.

In Fig. 6, the first image section IP1 indicates, as the recommended vehicles 20RE, a first vehicle, a second vehicle, and a third vehicle. The first image section IP1 may indicate identification information of the recommended vehicles 20RE. For example, the first image section IP1 may indicate the numbers, letters, and symbols on the vehicle registration plate of each recommended vehicle 20RE.

In Fig. 6, the second image section IP2 indicates, as the recommended chargers 60RE, a first charger, a second charger, and a third charger. The first charger is the recommended charger 60RE to which the first vehicle is to be connected. The second charger is the recommended charger 60RE to which the second vehicle is to be connected. The third charger is the recommended charger 60RE to which the third vehicle is to be connected.

In Fig. 6, the third image section IP3 indicates "9:00 to 12:00" as the time period during which the first vehicle is to be connected to the first charger. The third image section IP3 indicates "9:00 to 12:00" as the time period during which the second vehicle is to be connected to the second charger. The third image section IP3 indicates "9:00 to 12:00" as the time period during which the third vehicle is to be connected to the third charger. Here, "9:00 to 12:00" refers to the period from 9:00 to 12:00.

When a section in the first request image IM1 labeled "ACKNOWLEDGED" is selected, the first request image IM1 is no longer shown.

### Connection request based on the electric power demand on the day the processing circuitry 101 executes prediction

The processing circuitry 101 executes, at a specified time, a predicting process for predicting the electric power demand in each specified time period of the day the prediction is made, and a requesting process for issuing a connection request if the predicted electric power demand in any specified time period of the day the prediction is made is greater than the specified value DE.

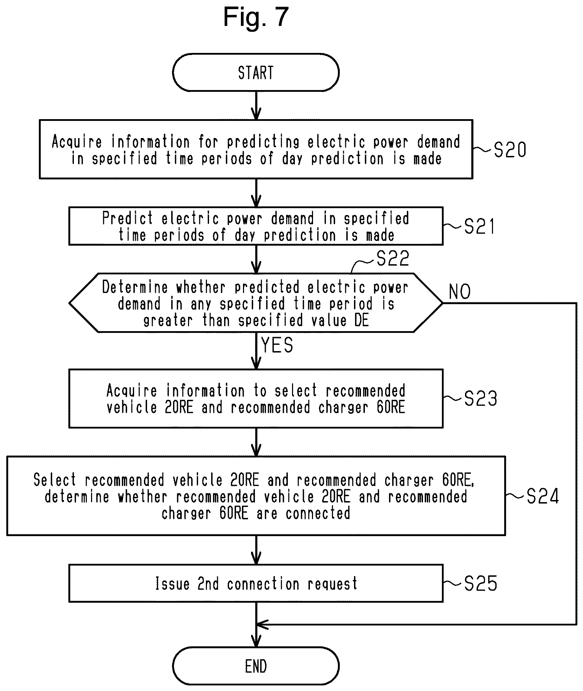

As illustrated in Fig. 7, when starting these processes, in S20, the processing circuitry 101 acquires information required to predict the electric power demand in each specified time period of the day the prediction is made. For example, the processing circuitry 101 acquires weather data for the day the prediction is made, and the electric power demand of the facility 50 in each specified time period of each day until the day before the day the prediction is made stored in the storage device 102. Then, the processing circuitry 101 proceeds to S21.

In S21, based on the acquired information, the processing circuitry 101 predicts the electric power demand in each specified time period of the day the prediction is made. The processing circuitry 101 uses a known method to predict the electric power demand of the facility 50 in each specified time period of the day the prediction is made.

For example, the processing circuitry 101 predicts the electric power demand of the facility 50 in each specified time period of the day the prediction is made based on the weather data of the day the prediction is made and the electric power demand of the facility 50 in each specified time period until the day before the prediction is made. The processing circuitry 101 uses a model trained through machine learning to predict the electric power demand of the facility 50 in each specified time period of the day the prediction is made.

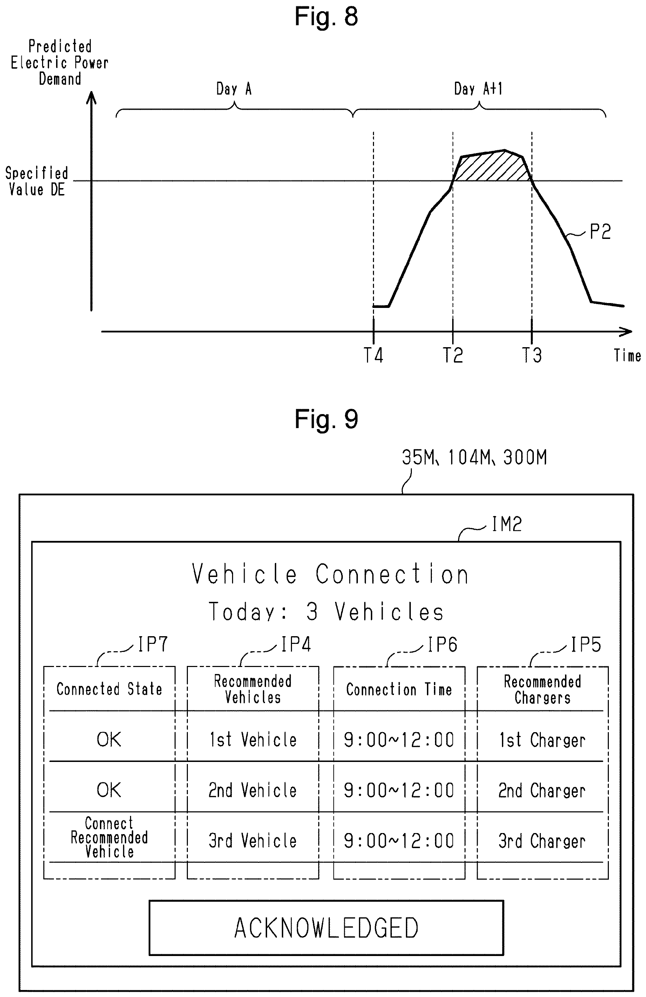

Referring to Fig. 8, the processing circuitry 101 performs S21 on day "A+1" at time "T4." Time "T4" is, for example, before a daily morning meeting is held in the facility 50 on day "A+1." In S21, the processing circuitry 101 acquires a predicted load curve P2 that indicates changes over time of predicted values of the electric power demand in each specified time period of day "A+1" from time "T4." Then, the processing circuitry 101 proceeds to S22.

In S22 of Fig. 7, the processing circuitry 101 determines at time "T4" of the day the prediction is made whether the predicted electric power demand is greater than the specified value DE in any specified time period. If the predicted electric power demand in each specified time period predicted at time "T4" of the day the prediction is made is not greater than the specified value DE (S22: NO), the processing circuitry 101 ends the process of Fig. 7.

In Fig. 8, the predicted electric power demand is greater than the specified value DE in the period from time "T2" to time "T3." If the electric power demand in any of the specified time periods is greater than the specified value DE on the day the prediction is made (S22: YES), the processing circuitry 101 proceeds to S23.

In S23 of Fig. 7, the processing circuitry 101 acquires information required to select, from the electric vehicles 20, the recommended vehicles 20RE that are to be connected to chargers 60. For example, in the same manner as S13 of Fig. 3, the processing circuitry 101 acquires, from the storage device 102, information indicating whether the type of each electric vehicle 20 is the plug-in hybrid electric vehicle 21 or the battery electric vehicle 22. Further, in S23, the processing circuitry 101 acquires information required to select, from the chargers 60, the recommended chargers 60RE that are to be connected to the recommended vehicles 20RE. For example, in the same manner as S14 of Fig. 3, the processing circuitry 101 acquires, from the storage device 102, information indicating the capacity of each charger 60 for supplying electric power from an electric vehicle 20 to the facility 50. Further, the processing circuitry 101 acquires information, from the storage device 102, information of each charger 60 indicating whether it is available for connection to an electric vehicle 20. The processing circuitry 101 acquires, from the storage device 102, information specifying each combination of the charger 60 and the electric vehicle 20 that are connected to each other. Then, the processing circuitry 101 proceeds to S24.

In S24, the processing circuitry 101 executes a vehicle selection process for selecting, from the electric vehicles 20, the recommended vehicles 20RE that are to be connected to chargers 60.

In S24, the processing circuitry 101 executes a charger selection process for selecting, from the chargers 60, the recommended chargers 60RE to which electric vehicles 20 are to be connected.

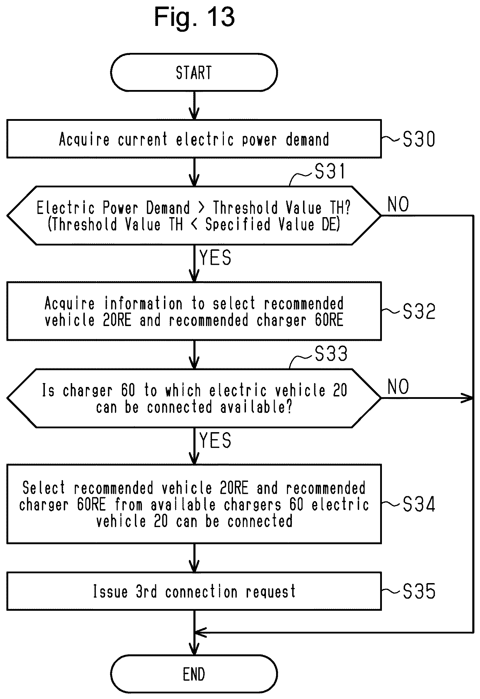

In the same manner as S14 of Fig. 13, the processing circuitry 101 selects at least one recommended vehicle 20RE and at least one recommended charger 60RE so that the electric power demand will not become greater than the specified value DE. The processing circuitry 101 selects, for example, the recommended vehicle 20RE and the recommended charger 60RE so that the electric vehicles 20 supply the facility 50 with the electric power to offset demand exceeding the specified value DE in the time period during which the electric power demand is greater than the specified value DE on the day the prediction is made.

In S24, the processing circuitry 101 determines whether the selected recommended vehicles 20RE are connected to the selected recommended chargers 60RE. Then, the processing circuitry 101 proceeds to S25.

In S25, the processing circuitry 101 executes a requesting process for issuing a connection request requesting for the electric vehicles 20 that are capable of supplying the facility 50 with electric power to be connected to the chargers 60. More specifically, the processing circuitry 101 executes the requesting process and issues a second connection request, as a connection request, requesting for the recommended vehicles 20RE to be connected to the recommended chargers 60RE. The second connection request includes the determination of whether the recommended vehicles 20RE are connected to the recommended chargers 60RE.

The electric power control system 10 issues the second connection request to the information processing terminal 104, which is installed in the facility 50. The electric power control system 10 issues the second connection request to the mobile information processing terminals 300 used by the employees at the business premises. The electric power control system 10 issues the second connection request to the mobile information processing terminal 300 used by the manager who is managing the electric vehicles 20. The electric power control system 10 issues the second connection request to the information processing terminal 35 installed in each electric vehicle 20. The electric power control system 10 issues the second connection request to the information processing terminal 35 installed in each recommended electric vehicle 20RE. Then, the processing circuitry 101 ends the process of Fig. 8.

Image for having the electric vehicles 20 connected to the chargers 60 on the day the prediction is made

Fig. 9 shows a second request image IM2 displayed on the monitor 104M of the information processing terminal 104 that receives the second connection request. The second request image IM2 is one example of an image for having the electric vehicles 20 connected to the chargers 60 on the day the prediction is made. The second request image IM2 is also displayed on the monitor 300M of each mobile information processing terminal 300 that receives the second connection request, and the monitor 35M of each information processing terminal 35 that receives the second connection request.

The second request image IM2 includes the date of the day that the recommended vehicle 20RE is to be connected to the recommended charger 60RE. More specifically, the second request image IM2 shows the date of the day the processing circuitry 101 issues the second connection request. The second request image IM2 indicates the quantity of the recommended vehicles 20RE.

The second request image IM2 includes a fourth image section IP4, a fifth image section IP5, and a sixth image section IP6.

The fourth image section IP4 indicates the recommended vehicles 20RE. The fifth image section IP5 indicates the recommended chargers 60RE. The sixth image section IP6 indicates the time periods during which the recommended vehicles 20RE indicated in the fourth image section IP4 are to be connected to the recommended chargers 60RE indicated in the fifth image section IP5.

In Fig. 9, the fourth image section IP4 indicates, as the recommended vehicles 20RE, a first vehicle, a second vehicle, and a third vehicle. The fourth image section IP4 is displayed in the same form as the first image section IP1. The fourth image section IP4 may indicate identification information of each recommended vehicle 20RE. For example, the fourth image section IP4 may indicate the numbers, letters, and symbols on the vehicle registration plate of each recommended vehicle 20RE.

In Fig. 9, the fifth image section IP5 indicates, as the recommended chargers 60RE, a first charger, a second charger, and a third charger.

In Fig. 9, the sixth image section IP6 indicates "9:00 to 12:00" as the time period during which the first vehicle is to be connected to the first charger. The sixth image section IP6 indicates "9:00 to 12:00" as the time period during which the second vehicle is to be connected to the second charger. The sixth image section IP6 indicates "9:00 to 12:00" as the time period during which the third vehicle is to be connected to the third charger.

The second request image IM2 further includes a seventh image section IP7 indicating whether the recommended vehicles 20RE are connected to the recommended chargers 60RE.

If a recommended vehicle 20RE is not electrically connected to a recommended charger 60RE, "CONNECT RECOMMENDED VEHICLE" is indicated in the seventh image section IP7. If a recommended vehicle 20RE is connected to a recommended charger 60RE, "OK" is indicated in the seventh image section IP7.

In the example shown in Fig. 9, the first vehicle is electrically connected to the first charger. Thus, in the second request image IM2 shown in Fig. 9, the seventh image section IP7 indicates the connection state of the first vehicle and the first charger as "OK." In the example shown in Fig. 9, the second vehicle is electrically connected to the second charger. Thus, in the second request image IM2 shown in Fig. 9, the seventh image section IP7 indicates the connection state of the second vehicle and the second charger as "OK." In the example shown in Fig. 9, the third vehicle is not electrically connected to the third charger. Thus, in the second request image IM2 shown in Fig. 9, the seventh image section IP7 indicates the connection state of the third vehicle and the third charger as "CONNECT RECOMMENDED VEHICLE."

When the section in the second request image IM2 labeled "ACKNOWLEDGED" is selected, the second request image IM2 is no longer shown.

### Operation of First Embodiment

As shown in Figs. 3 and 7, the processing circuitry 101 of the electric power control system 10 issues a connection request when the predicted electric power demand in any one of specified time periods is greater than the specified value DE. Thus, the electric power control system 10 has the electric vehicles 20, which are capable of supplying electric power to the facility 50, connected to the chargers 60.

### Advantages of First Embodiment

(1-1) Peak shaving of electric power is facilitated with the electric vehicles 20.

(1-2) As shown in Fig. 3, the processing circuitry 101 executes the predicting process for predicting the electric power demand in each specified time period of the following day. Further, if the predicted electric power demand in any time period is greater than the specified value DE, the processing circuitry 101 executes, on the day the prediction is made, the requesting process for issuing the first connection request as a connection request. More specifically, the electric power control system 10 predicts the electric power demand in each specified time period one day before the day for which the prediction is made, and issues a request one day in advance to have the electric vehicles 20 capable of supplying electric power to the facility 50 connected to the chargers 60.

This allows the electric vehicles 20 to be prepared one day before the day on which peak shaving is performed in accordance with the prediction. To prepare for the peak shaving performed on the following day, for example, the electric vehicles 20 may be connected to the chargers 60 one day before the day peak shaving is performed. Alternatively, to prepare for the peak shaving performed on the following day, for example, the availability of the electric vehicles 20 may be scheduled one day before the peak shaving.

(1-3) As shown in Fig. 7, the processing circuitry 101 executes the predicting process for predicting the electric power demand in each specified time period of the day the prediction is made, and the requesting process for issuing the second connection request as a connection request if the predicted electric power demand in any time period is greater than the specified value DE. The prediction of the electric power demand may change over time. The processing circuitry 101 predicts the electric power demand in each specified time period of the day the prediction is made. This allows the processing circuitry 101 to predict the electric power demand more accurately than when the electric power demand is predicted one day ahead of time. The electric power control system 10 has the electric vehicles 20 connected to the chargers 60 based on a more accurate prediction of the electric power demand. This facilitates peak shaving of electric power with the electric vehicles 20.

(1-4) The processing circuitry 101 executes a vehicle selection process for selecting at least one of the electric vehicles 20 as the recommended vehicle 20RE that is to be connected to a charger 60, and a requesting process for requesting the recommended vehicle 20RE to be connected to a charger 60. When there is more than one electric vehicle 20, it is difficult to determine which one of the electric vehicles 20 is to be connected to a charger 60. The processing circuitry 101 selects, from the multiple number of electric vehicles 20, the electric vehicles 20 that are to be connected to the chargers 60. The electric power control system 10 reduces the load for selecting the electric vehicle 20 that are to be connected to the chargers 60.

(1-5) When the electric vehicles 20 include at least one plug-in hybrid electric vehicle 21 and at least one battery electric vehicle 22, the processing circuitry 101 selects the plug-in hybrid electric vehicle 21 as the recommended vehicle 20RE. When an electric vehicle 20 performs a discharging operation, the amount of electrical energy stored in its battery 33 gradually decreases. Among the electric vehicles 20, the battery electric vehicle 22 cannot be operated if the amount of electrical energy stored in the battery 33 reaches a specified lower limit value. In contrast, among the electric vehicles 20, the plug-in hybrid electric vehicle 21 can still be operated by burning fuel even if the amount of electrical energy stored in the battery 33 reaches a specified lower limit value. The electric power control system 10 selects the plug-in hybrid electric vehicle 21 as the recommended vehicle 20RE. This avoids a situation in which the electric vehicle 20 cannot be operated when the amount of electrical energy stored in the battery 33 reaches the specified lower limit value.

(1-6) When there is more than one charger 60 in the facility 50, it is difficult to determine which of the chargers 60 are to be connected to an electric vehicle 20. The processing circuitry 101 executes the charger selection process for selecting at least one of the chargers 60 as the recommended charger 60RE to which an electric vehicle 20 is to be connected. The processing circuitry 101 executes the requesting process and issues a connection request including a request for connecting an electric vehicle 20 to the recommended charger 60RE. The electric power control system 10 reduces the load for selecting the chargers 60 to which the electric vehicles 20 are to be connected.

(1-7) The chargers 60 include at least two chargers 60 that differ in capacity of supplying electric power from an electric vehicle 20 to the facility 50. If an electric vehicle 20 is connected to a charger 60 that has the capacity to supply only low electric power to the facility 50, the electric power supplied to the facility 50 will be insufficient. Thus, the electric power demand may become greater than the specified value DE. The processing circuitry 101 selects the charger 60 of which the capacity is the highest for supplying electric power from an electric vehicle 20 to the facility 50 as the recommended charger 60RE. Thus, the electric power control system 10 avoids a situation in which the electric power supplied from the electric vehicle 20 to the facility 50 becomes insufficient.

(1-8) The electric power control system 10 issues a connection request to the information processing terminal 104, which is installed in the facility 50. The electric power control system 10 issues, for example, to the manager of the facility 50, a connection request that requests for an electric vehicle 20 capable of supplying electric power to the facility 50 to be connected to a charger 60.

(1-9) The facility 50 serves as business premises. The electric power control system 10 issues the connection request to the mobile information processing terminals 300 used by the employees at the business premises. The electric power control system 10 issues, to the employees at the facility 50, a connection request that requests for an electric vehicle 20 capable of supplying electric power to the facility 50 to be connected to a charger 60.

(1-10) The electric power control system 10 issues a connection request to the mobile information processing terminal 300 used by the manager managing the electric vehicles 20. The electric power control system 10 may issue, to the manager managing the electric vehicles 20, a connection request requesting for an electric vehicle 20 capable of supplying electric power to the facility 50 to be connected to the chargers 60.

(1-11) The electric power control system 10 issues a connection request to the information processing terminal 35 installed in each electric vehicle 20. This allows the electric power control system 10 to issue a connection request to the user who is operating the electric vehicle 20 that is capable of supplying electric power to the facility 50 to connect the electric vehicle 20 to a charger 60.

(1-12) The electric power control system 10 issues a connection request to the information processing terminal 35 installed in the recommended vehicle 20RE. This allows the electric power control system 10 to issue a connection request to the user who is operating the recommended vehicle 20RE to connect the electric vehicle 20, which is capable of supplying electric power to the facility 50, to a charger 60.

(1-13) The electric power control method executed by the electric power control system 10 includes steps (S11, S21) in which the processing circuitry 101 predicts the electric power demand in each specified time period. The electric power control method executed by the electric power control system 10 includes steps (S15, S25) for issuing a connection request requesting for the electric vehicles 20 that are capable of supplying electric power to the facility 50 to be connected to the chargers 60 if the predicted electric power demand in any of the specified time periods is greater than the specified value DE. When executing such an electric power control method, the electric power control system 10 has the electric vehicles 20 that are capable of supplying electric power to the facility 50 connected to the chargers 60 if the predicted electric power demand in any of the specified time periods is greater than the specified value DE. This facilitates peak shaving of electric power with the electric vehicles 20.

(1-14) The storage device 102 in the server 100 of the electric power control system 10 stores the electric power control program executed by the processing circuitry 101. The electric power control program has the processing circuitry 101 execute the predicting process for predicting the electric power demand in each specified time period. The electric power control program has the processing circuitry 101 execute the requesting process for issuing a connection request requesting for the electric vehicles 20 that are capable of supplying electric power to the facility 50 to be connected to the chargers 60 if the predicted electric power demand in any time period is greater than the specified value DE. If the predicted electric power demand in any specified time period is greater than the specified value DE, the electric control program, executed by the electric power control system 10, has the electric vehicles 20 that can supply electric power to the facility 50 connected to the chargers 60. This facilitates peak shaving of electric power with the electric vehicles 20.

### Modified Example of First Embodiment

The first embodiment may be modified as described below. The first embodiment and the modified examples described below may be combined as long as there is no technical contradiction.

The processing circuitry 101 may execute the predicting process for predicting the electric power demand in each time period of the day the prediction is made at the same time as the predicting process for predicting the electric power demand in each specified time period of the following day. More specifically, the processing circuitry 101 may execute the process of Fig. 3 and the process of Fig. 7 at the same time.

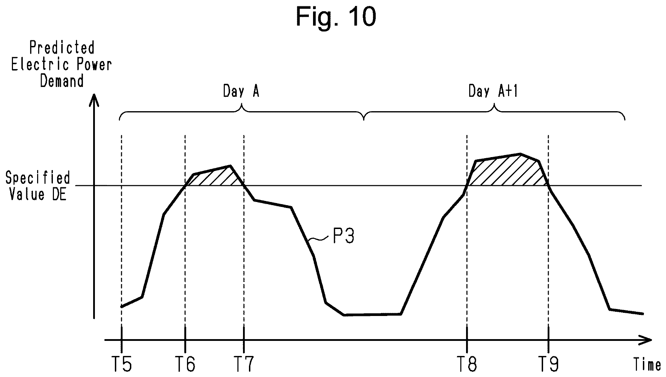

Referring to Fig. 10, the processing circuitry 101 performs S11 of Fig. 3 and S21 of Fig. 3 at time "T5" on day "A." As a result, the processing circuitry 101 acquires a predicted load curve P3 that indicates changes over time of predicted values of the electric power demand in each specified time period of day from time "T5" of day "A." The predicted electric power demand is greater than the specified value DE during the period from time "T6" to time "T7" and the period from time "T8" to time "T9." In this case, the processing circuitry 101 executes the requesting process (S15) of Fig. 3 for issuing the first connection request, and the requesting process (S25) of Fig. 7 for issuing the second connection request.

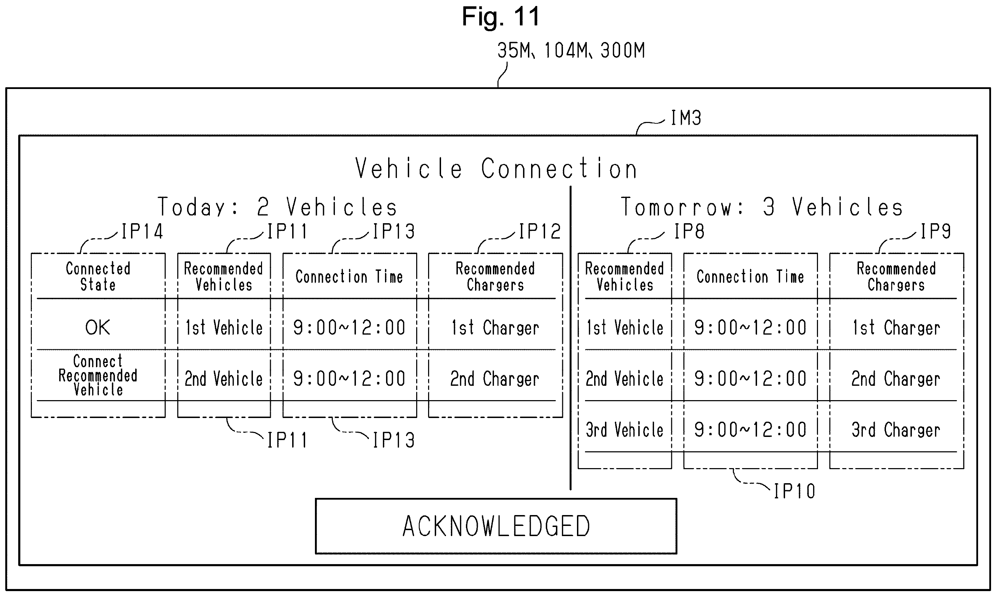

Fig. 11 shows a third request image IM3 displayed on the monitor 104M of the information processing terminal 104 that receives the first connection request, which is illustrated in Fig. 3, and the second connection request, which is illustrated in Fig. 7.

The third request image IM3 is one example of an image for having the electric vehicles 20 connected to the chargers 60 on the day the prediction is made and the day following the day the prediction is made. The third request image IM3 is also shown on the monitor 300M of each mobile information processing terminal 300 that receives the first connection request and the second connection request and the monitor 35M of the information processing terminal 35 that receives the first connection request and the second connection request.

The third request image IM3 includes dates of the days on which the recommended vehicles 20RE are to be connected to the recommended chargers 60RE. More specifically, the third request image IM3 includes the date of the day on which the processing circuitry 101 issued the first connection request and the second connection request, and the date of day following the day the processing circuitry 101 issued the first connection request and the second connection request. The third request image IM3 includes the quantity of the recommended vehicles 20RE for each day.

The third request image IM3 includes an eighth image section IP8, a ninth image section IP9, a tenth image section IP10, an eleventh image section IP11, a twelfth image section IP12, a thirteenth image section IP13, and a fourteenth image section IP14.

The eighth image section IP8 indicates the recommended vehicles 20RE for the day following the day the execution is predicted in the same manner as the first image section IP1 shown in Fig. 6. The ninth image section IP9 indicates the recommended chargers 60RE for the day following the day the execution is predicted in the same manner as the second image section IP2 shown in Fig. 6. The tenth image section IP10 indicates the time periods during which the recommended vehicles 20RE indicated in the eighth image section IP8 are to be electrically connected to the recommended chargers 60RE indicated in the ninth image section IP9.

The eleventh image section IP11 indicates the recommended vehicles 20RE for the day the prediction is made in the same manner as the fourth image section IP4 shown in Fig. 9. The twelfth image section IP12 indicates the recommended chargers 60RE for the day the prediction is made in the same manner as the fifth image section IP5 shown in Fig. 9. The thirteenth image section IP13 indicates the time periods during which the recommended vehicles 20RE indicated in the eleventh image section IP11 are to be electrically connected to the recommended chargers 60RE indicated in the twelfth image section IP12. The fourteenth image section IP14 shows whether the recommended vehicles 20RE are electrically connected to the recommended chargers 60RE in the same manner as the seventh image section IP7 shown in Fig. 9.

When a section in the third request image IM3 labeled "ACKNOWLEDGED" is selected, the third request image IM3 is no longer shown.

The processing circuitry 101 may execute only one of the process of Fig. 3 and the process of Fig. 7.

The processing circuitry 101 may execute the process of Fig. 3 more than once during a single day.

The processing circuitry 101 may execute the process of Fig. 7 more than once during a single day.

The electric power demand predicted by the processing circuitry 101 does not have to be the electric power demand for the following day. For example, the processing circuitry 101 may predict the electric power demand for a day that is two days after the prediction is made. For example, the processing circuitry 101 may predict the electric power demand for a day that is one week after the prediction is made.

The electric vehicles 20 may all be plug-in hybrid electric vehicles 21.

The electric vehicles 20 may all be battery electric vehicles 22.

When the electric vehicles 20 include a plug-in hybrid electric vehicle 21 and a battery electric vehicle 22, the processing circuitry 101 may select the battery electric vehicle 22 as the recommended vehicle 20RE.

The processing circuitry 101 may select, as the recommended vehicle 20RE, the one of the electric vehicles 20 of which the amount of electrical energy stored in the battery 33 is the greatest.

The processing circuitry 101 does not have to execute the acquiring process for acquiring the amount of electrical energy stored in the battery 33 of each of the electric vehicles 20.

The processing circuitry 101 does not have to execute the vehicle selection process for selecting the recommended vehicle 20RE as long as the connection request is issued. When the processing circuitry 101 does not execute the vehicle selection process for selecting the recommended vehicle 20RE, the connection request does not include a request for connecting the recommended vehicle 20RE to the charger 60.

The processing circuitry 101 may select, as the recommended charger 60RE, a charger 60 that is not the charger 60 of which the capacity is the highest for supplying electric power from an electric vehicle 20 to the facility 50.

The processing circuitry 101 does not have to execute the acquiring process for acquiring information indicating the capacity of each charger 60 for supplying electric power from an electric vehicle 20 to the facility 50.

The processing circuitry 101 does not have to execute the charger selection process for selecting the recommended charger 60RE as long as the connection request is issued. When the processing circuitry 101 does not execute the charger selection process for selecting the recommended charger 60RE, the connection request does not include a request for connecting an electric vehicle 20 to the recommended charger 60RE.

### Second Embodiment

An electric power control system in accordance with a second embodiment will now be described with reference to Figs. 3, 7, and 12. The description hereafter will focus on the differences from the first embodiment. Items that are the same as the corresponding components of the first embodiment will not be described in detail.

The second embodiment differs from the first embodiment in the criteria that the processing circuitry 101 uses to select the recommended vehicles 20RE and the recommended chargers 60RE in S13 of Fig. 3 and S23 of Fig. 7.

In S13 of Fig. 3 and S23 of Fig. 7, the processing circuitry 101 of the second embodiment selects the recommended vehicles 20RE so that the quantity of the electric vehicles 20 that are to be connected to the chargers 60 is the least possible. That is, the processing circuitry 101 selects at least one recommended vehicle 20RE so that the quantity of the recommended vehicles 20RE for obtaining the necessary electric power is the least possible.

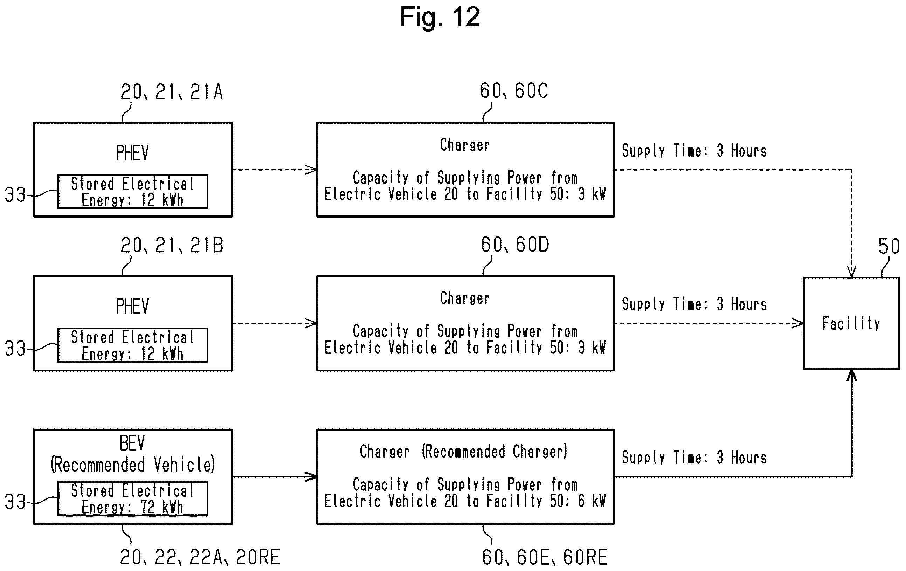

With reference to Fig. 12, a case will be described in which the electric vehicles 20 have to supply the facility 50 with an electric power of 6 kW for over three hours to avoid a situation in which the electric power demand of the facility 50 becomes greater than the specified value DE.

In S13 of Fig. 3 and S23 of Fig. 7, the processing circuitry 101 selects the recommended vehicle 20RE from a plug-in hybrid electric vehicle 21A, a plug-in hybrid electric vehicle 21B, and a battery electric vehicle 22A, which are shown in Fig. 12. The amount of electrical energy stored in the battery 33 of the plug-in hybrid electric vehicle 21A is 12 kWh. The amount of electrical energy stored in the battery 33 of the plug-in hybrid electric vehicle 21B is 12 kWh. The amount of electrical energy stored in the battery 33 of the battery electric vehicle 22A is 72 kWh.

In S13 of Fig. 3 and S23 of Fig. 7, the processing circuitry 101 selects the recommended charger 60RE from a charger 60C, a charger 60D, and a charger 60E, which are shown in Fig. 12. The charger 60C has a capacity for supplying an electric power of 3 kW from an electric vehicle 20 to the facility 50. The charger 60D has a capacity for supplying an electric power of 3 kW from an electric vehicle 20 to the facility 50. The charger 60E has a capacity for supplying an electric power of 6 kW from an electric vehicle 20 to the facility 50.

There are several patterns for supplying electric power to the facility 50 to avoid a situation in which the electric power demand of the facility 50 becomes greater than the specified value DE. For example, in a first pattern, as shown by the broken lines in Fig. 12, the plug-in hybrid electric vehicle 21A is electrically connected to the charger 60C, and the plug-in hybrid electric vehicle 21B is electrically connected to the charger 60D. In the first pattern, the amount of electrical energy stored in the battery 33 of the plug-in hybrid electric vehicle 21A is 3 kWh after three hours elapses from when a discharging operation is started. In the first pattern, the amount of electrical energy stored in the battery 33 of the plug-in hybrid electric vehicle 21B is 3 kWh after three hours elapse from when a discharging operation is started. Thus, if the processing circuitry 101 selects the first pattern, even after supplying electric power to the facility 50, each of the electric vehicles 20 can still be driven by the motor 30, which is supplied with electric power from the battery 33.

In a second pattern, for example, the battery electric vehicle 22A is electrically connected to the charger 60E. In the second pattern, the amount of electrical energy stored in the battery 33 of the battery electric vehicle 22A is 54 kWh after three hours elapse from when a discharging operation is started. Thus, if the processing circuitry 101 selects the second pattern, the electric vehicle 20 can still be driven by the motor 30, which is supplied with electric power from the battery 33.

The processing circuitry 101 selects the recommended vehicles 20RE so that the quantity of the electric vehicles 20 that are to be connected to the chargers 60 is the least possible. Thus, the processing circuitry 101 selects the second pattern and connects the electric vehicles 20 and the chargers 60, accordingly. That is, in S13 of Fig. 3 and S23 of Fig. 7, the processing circuitry 101 selects the battery electric vehicle 22A as the recommended vehicle 20RE, and the charger 60E as the recommended charger 60RE.

The electric power control system 10 may include a charger 60 that has more than one charge plug 61. In such a case, the processing circuitry 101 selects the recommended chargers 60RE so that the quantity of the chargers 60 to which the electric vehicles 20 are to be connected is the least possible. That is, the processing circuitry 101 selects at least one recommended charger 60RE so that the quantity of the at least one recommended charger 60RE for obtaining the necessary electric power is the least possible.

### Operation of Second Embodiment

If the predicted electric power demand in any specified time period is greater than the specified value DE, the electric power control system 10 has the electric vehicles 20 capable of supplying electric power to the facility 50 connected to the chargers 60. The processing circuitry 101 selects the recommended vehicles 20RE so that the quantity of the electric vehicles 20 that are to be connected to the chargers 60 is the least possible.

### Advantages of Second Embodiment

The second embodiment has advantages (1-1) to (1-4), (1-6), and (1-8) to (1-14) of the first embodiment. The second embodiment also has the advantages described below.

(2-1) The electric power control system 10 decreases the quantity of the electric vehicles 20 that cannot be used as transport means.

(2-2) The chargers 60 that are already connected to electric vehicles 20 are not available for performing a charging operation in other electric vehicles 20. The processing circuitry 101 selects the recommended chargers 60RE so that the quantity of the chargers 60 to which the electric vehicles 20 are connected is the least possible. This allows the electric power control system 10 to decrease the quantity of the chargers 60 that cannot be used for charging.

### Modified Example of Second Embodiment

The second embodiment may be modified as described below. The second embodiment and the modified examples of the second embodiment described below may be combined as long as there is no technical contradiction.

The processing circuitry 101 may select the recommended vehicles 20RE so that the quantity of the plug-in hybrid electric vehicles 21 that are to be connected to chargers 60 is the least possible.

The processing circuitry 101 may select the recommended vehicles 20RE so that the quantity of the battery electric vehicles 22 that are to be connected to chargers 60 is the least possible.

### Third Embodiment

An electric power control system in accordance with a third embodiment will now be described with reference to Figs. 13 to 16. The description hereafter will focus on differences from the first embodiment. Items that are the same as the corresponding components of the first embodiment will not be described in detail.

In the first embodiment, the electric power control system 10 determines whether to issue the connection request based on the predicted electric power demand in each specified time period. In addition, in the third embodiment, the processing circuitry 101 determines whether to issue the connection request based on the current electric power demand acquired from the electric power meter 55.

Issuance of connection request based on the electric power demand

The processing circuitry 101 repetitively executes, in specified cycles, a process for determining whether to issue a connection request based on the current electric power demand acquired by the electric power meter 55. The processing circuitry 101 may execute this process at a predetermined specified time.

As shown in Fig. 13, when the process starts, in S30, the processing circuitry 101 acquires the current electric power demand from the electric power meter 55. Then, the processing circuitry 101 proceeds to S31. The current electric power demand is the electric power demand at the specified time and calculated from the most recent electric power demand.

In S31, the processing circuitry 101 determines whether the acquired electric power demand is greater than a threshold value TH. The threshold value TH is less than the specified value DE.

If the electric power demand is greater than the threshold value TH (S31: YES), the processing circuitry 101 proceeds to S32. If the acquired electric power demand is not greater than the threshold value TH (S31: NO), the processing circuitry 101 temporarily ends the process of Fig. 13.

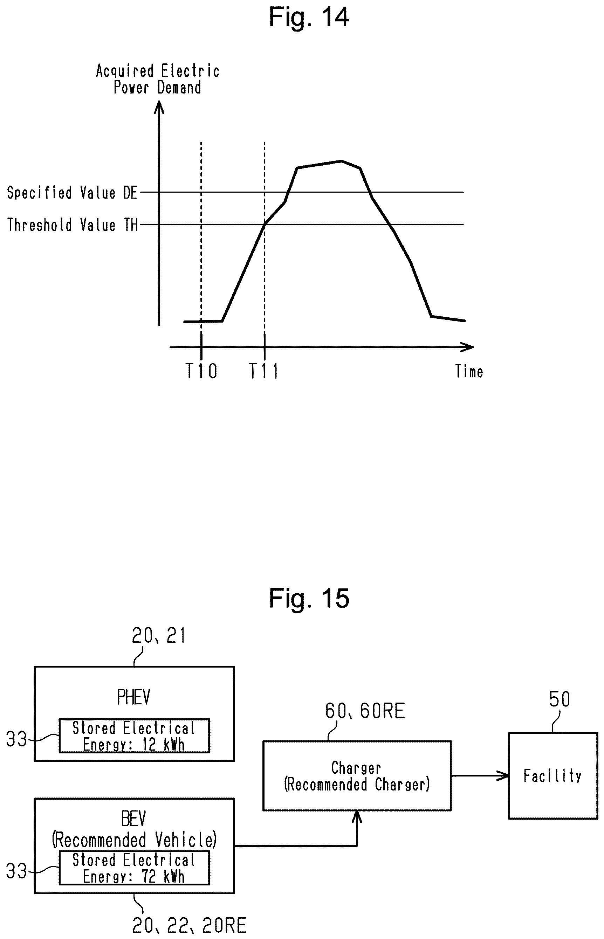

With reference to Fig. 14, if the processing circuitry 101 executes S31 at time "T10," the acquired electric power demand is less than the threshold value TH (S31: NO). Thus, the processing circuitry 101 temporarily ends the process of Fig. 13. If the processing circuitry 101 executes S31 at time "T11," the acquired electric power demand is greater than the threshold value TH (S31: NO). Thus, the processing circuitry 101 proceeds to S32 of Fig. 13.

In S32, the processing circuitry 101 acquires, in the same manner as S13 of Fig. 3, information to select, from the electric vehicles 20, the recommended vehicles 20RE that are to be connected to chargers 60. Additionally, in S32, the processing circuitry 101 acquires information required to select, from the chargers 60, the recommended chargers 60RE to which the recommended vehicles 20RE are to be connected. Further, the processing circuitry 101 acquires information, from the storage device 102, indicating the chargers 60 that can be connected to an electric vehicle 20. The processing circuitry 101 also acquires, from the storage device 102, information specifying the combination of the chargers 60 and the connected electric vehicles 20. Then, the processing circuitry 101 proceeds to S33.

In S33, the processing circuitry 101 determines whether if there is an available charger 60 to which an electric vehicle 20 can be connected.

If there is an available charger 60 to which an electric vehicle 20 can be connected (S33: YES), the processing circuitry 101 proceeds to S34.

If there is no available charger 13 to which an electric vehicle 20 can be connected (S33: NO), the processing circuitry 101 temporarily ends the process.

In S34, the processing circuitry 101 executes a vehicle selection process for selecting, from the electric vehicles 20, at least one recommended vehicle 20RE that is to be connected to a charger 60. Further, in S34, the processing circuitry 101 executes a charger selection process for selecting, from the available chargers 60, at least one recommended charger 60RE to which an electric vehicle 20 can be connected.

Based on the information stored in the storage device 102, the processing circuitry 101 may select, as the recommended vehicle 20RE, the one of the electric vehicles 20 of which the amount of electrical energy stored in the battery 33 is the greatest. The storage device 102 stores the amount of electrical energy stored in the battery 33 of each electric vehicle 20.

Fig. 15 shows a case in which the amount of electrical energy stored in the battery 33 of each plug-in hybrid electric vehicle 21 is 12 kWh, and the amount of electrical energy stored in the battery 33 of the battery electric vehicle 22 is 72 kWh. In this case, the processing circuitry 101 selects the battery electric vehicle 22, of which the amount of electrical energy stored in the battery 33 is the greatest, as the recommended vehicle 20RE. Then, the processing circuitry 101 proceeds to S35.

In S35, the processing circuitry 101 executes a requesting process and issues a third connection request, as a connection request, requesting for the recommended vehicle 20RE to be connected to the recommended charger 60RE. Then, the processing circuitry 101 ends the process of Fig. 13.

### Image for having the electric vehicles 20 connected to the chargers 60

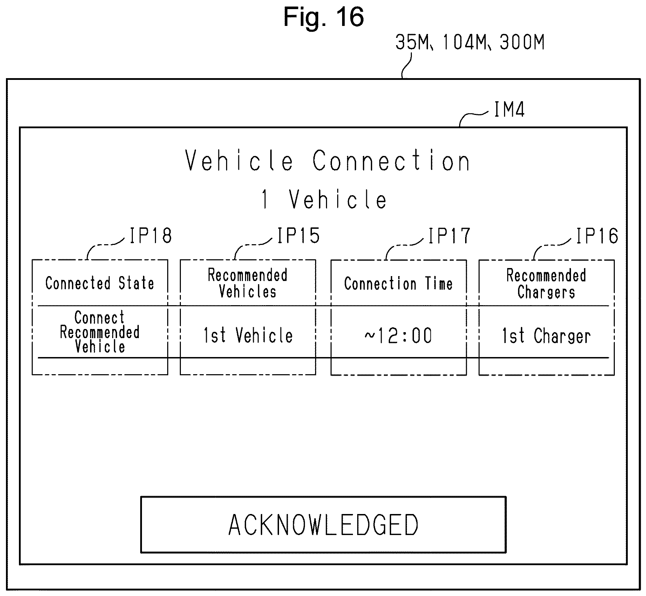

Fig. 16 shows a fourth request image IM4 displayed on the monitor 104M of the information processing terminal 104 that receives the third connection request. The fourth request image IM4 is one example of an image for having the electric vehicles 20 connected to the chargers 60. The fourth request image IM4 is also displayed on the monitor 300M of each mobile information processing terminal 300 that receives the third connection request, and the monitor 35M of each information processing terminal 35 that receives the third connection request. The fourth request image IM4 indicates the quantity of the recommended vehicles 20RE.

The fourth request image IM4 includes a fifteenth image section IP15, a sixteenth image section IP16, and a seventeenth image section IP17.

The fifteenth image section IP15 indicates the recommended vehicles 20RE. The sixteenth image section IP16 indicates the recommended chargers 60RE. The seventeenth image section IP17 indicates the time periods during which the recommended vehicles 20RE indicated in the fifteenth image section IP15 are to be connected to the recommended chargers 60RE indicated in the sixteenth image section IP16.

In Fig. 16, the fifteenth image section IP15 indicates, as the recommended vehicle 20RE, a first vehicle. The fifteenth image section IP15 is displayed in the same form as the first image section IP1. The fifteenth image section IP15 may indicate identification information of the recommended vehicles 20RE. For example, the fifteenth image section IP15 may indicate the numbers, letters, and symbols on the vehicle registration plate of each recommended vehicle 20RE.

In Fig. 16, the sixteenth image section IP16 indicates, as the recommended charger 60RE, a first charger.

In Fig. 16, the seventeenth image section IP17 indicates "until 12:00" as the time period during which the first vehicle is to be connected to the first charger. Here, "until 12:00" refers to the period from the time at which the third connection request is issued to 12:00.

The fourth request image IM4 further includes an eighteenth image section IP18 indicating whether the recommended vehicles 20RE are connected to the recommended chargers 60RE. The eighteenth image section IP18 of the fourth request image IM4 is displayed in the same form as the seventh image section IP7 of the second request image IM2. More specifically, if a recommended vehicle 20RE is not electrically connected to a recommended charger 60RE, "CONNECT RECOMMENDED VEHICLE" is indicated in the eighteenth image section IP18. If a recommended vehicle 20RE is electrically connected to a recommended charger 60RE, "OK" is indicated in the eighteenth image section IP18.

In the example shown in Fig. 16, the first vehicle is not electrically connected to the first charger. Thus, the eighteenth image section IP18 indicates "CONNECT RECOMMENDED VEHICLE."

When a section in the fourth request image IM4 labeled "ACKNOWLEDGED" is selected, the fourth request image IM4 is no longer shown.

### Operation of Third Embodiment

If the acquired current electric power demand is greater than the threshold value TH, the processing circuitry 101 has the electric vehicles 20 that can supply electric power to the facility 50 connected to the chargers 60.

### Advantages of Third Embodiment

The third embodiment has the same advantages as the first embodiment. The third embodiment also has the advantages described below.

(3-1) The predicted electric power demand may deviate from the electric power demand. If the predicted electric power demand deviates from the current electric power demand, the electric power control system 10 has the electric vehicles 20 connected to the chargers 60 based on the current electric power demand. This facilitates peak shaving of electric power with the electric vehicles 20.

(3-2) When there is an available charger 60 to which an electric vehicle 20 can be connected, the processing circuitry 101 executes the requesting process for issuing a connection request. When there is no available charger 60 to which an electric vehicle 20 can be connected, an electric vehicle 20 cannot be connected to a charger 60 even if a connection request is issued. The electric power control system 10 avoids a situation in which a connection request is issued when there is no available charger 60 to which an electric vehicle 20 can be connected.

(3-3) The threshold value TH is less than the specified value DE. Thus, the processing circuitry 101 issues the connection request before the current electric power demand reaches the specified value DE. This allows the electric power control system 10 to have the electric vehicles 20 connected to the chargers 60 before the current electric power demand reaches the specified value DE.

(3-4) When an electric vehicle 20 performs a discharging operation, if the amount of electrical energy stored in its battery 33 reaches a specified lower limit value, the discharging operation cannot be continued. The processing circuitry 101 executes the acquiring process for acquiring information of the amount of electrical energy stored in the battery 33 of each electric vehicle 20. The processing circuitry 101 executes the vehicle selection process for selecting, as the recommended vehicle 20RE, the one of the electric vehicles 20 of which the amount of electrical energy stored in the battery 33 is the greatest. This avoids a situation in which the electric power control system 10 cannot continue a discharging operation.

### Modified Examples of Third Embodiment

The third embodiment may be modified as described below. The first embodiment and the modified examples of the third embodiment described below may be combined as long as there is no technical contradiction.

The threshold value TH may be any value that is less than or equal to the specified value DE. For example, the threshold value TH may be equal to the specified value DE.

Even if there is no available charger 60 to which an electric vehicle 20 can be connected due to a reason such as the electric vehicles 20 already being connected to the chargers 60, the processing circuitry 101 may execute the requesting process if the electric power demand is greater than the threshold value TH.

If the electric power demand is greater than the threshold value TH even though an electric vehicle 20 is connected to a charger 60, the amount of electrical energy stored in the battery 33 of the electric vehicle 20 that is connected to the chargers 60 may have reached the lower limit value. Thus, as the requesting process for issuing a connection request, the processing circuitry 101 may issue a request for disconnecting the electric vehicle 20 from the charger 60 and a request for connecting another electric vehicle 20 to the charger 60.

### Other Modified Examples

The above embodiments may commonly be modified as described below. The modified examples described below may be combined as long as there is no technical contradiction.

The recipient of a connection request issued by the electric power control system 10 may be changed. For example, the electric power control system 10 does not have to issue a connection request to the information processing terminal 104 installed in the facility 50. The electric power control system 10 does not have to issue a connection request to the mobile information processing terminals 300 used by the employees at the facility 50. The electric power control system 10 does not have to issue a connection request to the mobile information processing terminal 300 used by the manager who is managing the electric vehicles 20. The electric power control system 10 does not have to issue a connection request to the information processing terminal 35 installed in each electric vehicle 20. The electric power control system 10 does not have to issue a connection request to the information processing terminal 35 installed in each recommended vehicle 20RE.

In S14 of Fig. 3 and S24 of Fig. 7, the processing circuitry 101 may also select, as the recommended vehicle 20RE, the one of the electric vehicles 20 of which the amount of electrical energy stored in the battery 33 is the greatest.

In the next example, the electric vehicles 20 include a single plug-in hybrid electric vehicle 21 and a single battery electric vehicle 22. If the amount of electrical energy stored in the battery 33 of the battery electric vehicle 22 is greater than the amount of electrical energy stored in the battery 33 of the plug-in hybrid electric vehicle 21, the processing circuitry 101 may select the battery electric vehicle 22 as the recommended vehicle 20RE.

The processing circuitry 101 may include one or more processors that operate using computer programs (software) to execute processes. The processing circuitry 101 may include one or more dedicated hardware circuits, such as application-specific integrated circuits (ASICs), that execute at least some of the processes or include a combination of such hardware circuits. Each processor may include a CPU and memory such as a RAM and a ROM. The memory stores program codes or instructions configured to have the CPU execute processes. The memory, namely, a computer-readable medium, includes any available medium that is accessible by a general-purpose or special-purpose computer. The programs may be stored in a non-volatile data computer-readable medium, such as a CD-ROM, and distributed as program products. The programs may be provided as downloadable program products by an information provider connected to a network, such as the internet.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. An electric power control system (10), comprising:
electric vehicles (20), each provided with a battery (33) that is chargeable and dischargeable; and
a facility (50) configured to draw electric power, wherein:
the facility (50) includes
power-receiving equipment (51) configured to be supplied with electric power from an electric power grid (EG),
chargers (60), each of which is electrically connected to the power-receiving equipment (51) and each of which is configured to selectively perform one of a charging operation and a discharging operation in a state electrically connected to one of the electric vehicles (20), the charging operation causing the power receiving equipment (51) to supply electric power to the electrically connected electric vehicle (20), and the discharging operation causing the electrically connected electric vehicle (20) to supply electric power to the facility (50), and
a server (100) provided with processing circuitry (101) configured to control the charging operation and the discharging operation of each of the chargers (60); and
the processing circuitry (101) is configured to execute a predicting process that predicts electric power demands, in which each of the electric power demands is the electric power drawn by the facility (50) in a corresponding one of specified time periods, and
when any one of the predicted electric power demands is greater than a predetermined specified value (DE), the processing circuitry (101) is configured to execute a requesting process that issues a connection request requesting for any of the electric vehicles (20) that is capable of supplying the facility (50) with electric power to be connected to one of the chargers (60).

2. The electric power control system (10) according to claim 1, wherein:
the specified time periods include specified time periods of a day following a day the predicting process is executed, and the electric power demands include electric power demands corresponding to the specified time periods of the day following the day the predicting process is executed; and
when predicting that any one of the electric power demands on the day following the day the prediction is made will become greater than the specified value (DE), the requesting process includes issuing the connection request on the day the predicting process is executed.

3. The electric power control system (10) according to claim 1 or 2, wherein:
the specified time periods include specified time periods of a day the predicting process is executed, and the electric power demands include electric power demands corresponding to the specified time periods of the day the predicting process is executed; and
when predicting that any one of the electric power demands on the day the predicting process is executed will become greater than the specified value (DE), the requesting process includes issuing the connection request on the day the predicting process is executed.

4. The electric power control system (10) according to any one of claims 1 to 3, wherein:
the processing circuitry (101) is configured to execute an acquiring process that acquires a current electric power demand that is the electric power demand in a current specified time period, and
the requesting process further includes issuing the connection request when the current electric power demand that has been acquired is greater than a threshold value (TH).

5. The electric power control system (10) according to claim 4, wherein the processing circuitry (101) is configured to execute the requesting process that issues the connection request when the chargers (60) include an available charger (60).

6. The electric power control system (10) according to claim 4 or 5,
wherein the threshold value (TH) is less than the specified value (DE).

7. The electric power control system (10) according to any one of claims 1 to 6, wherein:
the processing circuitry (101) is configured to execute a vehicle selection process that selects a recommended vehicle (20RE) from the electric vehicles (20); and
the requesting process includes issuing the connection request that includes a request for connecting the recommended vehicle (20RE) to one of the chargers (60).

8. The electric power control system (10) according to claim 7, wherein:
the electric vehicles (20) include at least one plug-in hybrid electric vehicle (21) and at least one battery electric vehicle (22); and
the vehicle selection process includes selecting the at least one plug-in hybrid electric vehicle (21) as the recommended vehicle (20RE).

9. The electric power control system (10) according to claim 7 or 8, wherein:
the processing circuitry (101) is configured to execute an acquiring process that acquires information on an amount of electrical energy stored in the battery (33) of each of the electric vehicles (20); and
the vehicle selection process includes selecting from the electric vehicles (20), as the recommended vehicle (20RE), an electric vehicle (20) of which the amount of electrical energy stored in the battery (33) is greatest.

10. The electric power control system (10) according to any one of claims 7 to 9, wherein:
the recommended vehicle (20RE) is at least one recommended vehicle (20RE), and each of the at least one recommended vehicle (20RE) is requested to be connected to corresponding one of the chargers (60); and
the processing circuitry (101) is configured to select, in the vehicle selection process, the at least one recommended vehicle (20RE) so that a quantity of the at least one recommended vehicle (20RE) is least possible.

11. The electric power control system (10) according to any one of claims 1 to 10, wherein:
the processing circuitry (101) is configured to execute a charger selection process that selects a recommended charger (60RE) from the chargers (60); and
the requesting process includes issuing the connection request that includes a request for connecting one of the electric vehicles (20) to the recommended charger (60RE).

12. The electric power control system (10) according to claim 11,
wherein the charger selection process includes selecting, as the recommended charger (60RE), one of the chargers (60) of which capacity is highest for supplying electric power from one of the electric vehicles (20) to the facility (50).

13. The electric power control system (10) according to claim 11 or 12, wherein:
the recommended charger (60RE) is at least one recommended charger (60RE), and each of the at least one recommended charger (60RE) is requested to be connected to corresponding one of the electric vehicles (20); and
the processing circuitry (101) is configured to select, in the charger selection process, the at least one recommended charger (60RE) so that a quantity of the at least one recommended charger (60RE) is least possible.

14. A method for controlling electric power in an electric power control system (10), the electric power control system (10) including electric vehicles (20), each provided with a battery (33) that is chargeable and dischargeable, and a facility (50) configured to draw electric power, in which the facility (50) includes power-receiving equipment (51) configured to be supplied with electric power from an electric power grid (EG), chargers (60), each of which is electrically connected to the power-receiving equipment (51) and each of which selectively performs one of a charging operation and a discharging operation in a state electrically connected to one of the electric vehicles (20), the charging operation causing the power receiving equipment (51) to supply electric power to the electrically connected electric vehicle (20), and the discharging operation causing the electrically connected electric vehicle (20) to supply electric power to the facility (50), and a server (100) provided with processing circuitry (101) configured to control the charging operation and the discharging operation of each of the chargers (60), the method comprising:
executing a predicting process that predicts electric power demands with the processing circuitry (101), in which each of the electric power demands is the electric power drawn by the facility (50) in a corresponding one of specified time periods, and
when any one of the predicted electric power demands is greater than a predetermined specified value (DE), executing a requesting process with the processing circuitry (101) that issues a connection request requesting for any of the electric vehicles (20) that is capable of supplying the facility (50) with electric power to be connected to one of the chargers (60).

15. An electric power control program for an electric power control system (10), the electric power control system (10) including electric vehicles (20), each provided with a battery (33) that is chargeable and dischargeable, and a facility (50) configured to draw electric power, in which the facility (50) includes power-receiving equipment (51) configured to be supplied with electric power from an electric power grid (EG), chargers (60), each of which is electrically connected to the power-receiving equipment (51) and each of which selectively performs one of a charging operation and a discharging operation in a state electrically connected to one of the electric vehicles (20), the charging operation causing the power receiving equipment (51) to supply electric power to the electrically connected electric vehicle (20), and the discharging operation causing the electrically connected electric vehicle (20) to supply electric power to the facility (50), and a server (100) provided with processing circuitry (101) configured to control the charging operation and the discharging operation of each of the chargers (60), the electric control program, when executed by the processing circuitry (101), causing the processing circuitry (101) to execute:
a predicting process that predicts electric power demands, in which each of the electric power demands is the electric power drawn by the facility (50) in a corresponding one of specified time periods, and
when any one of the predicted electric power demands is greater than a predetermined specified value (DE), a requesting process that issues a connection request requesting for any of the electric vehicles (20) that is capable of supplying the facility (50) with electric power to be connected to one of the chargers (60).
